# EUROPÄISCHE PATENTANMELDUNG

(11) **EP 3 238 863 A1**
(43) Veröffentlichungstag der Anmeldung: **01.11.2017**
(21) Anmeldenummer: 16167368.6
(22) Anmeldetag: 27.04.2016
(51) Int. Cl.: B22F 3/105, B22F 7/06, B22F 7/08, B22F 1/00, C22C 1/04, B22F 3/24, B22F 3/17

(54) **VERFAHREN ZUM HERSTELLEN EINER SCHAUFEL FÜR EINE STRÖMUNGSMASCHINE**

(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die Erfindung betrifft ein Verfahren zum Herstellen einer Schaufel (10) für eine Strömungsmaschine, insbesondere für ein Flugtriebwerk, umfassend zumindest folgende Schritte:
- Herstellen eines Schaufelfußes (14) mit einem ersten Plattformbereich (34) aus einem ersten Werkstoff;
- Herstellen eines Schaufelblatts (24) der Schaufel (10) durch ein generatives Herstellverfahren, bei welchem das Schaufelblatt (24) mit einem zweiten Plattformbereich (36) in einem mit einem Unterdruck (p) beaufschlagten Aufbaubereich (28) durch schichtweises Verschmelzen und/oder Versintern eines metallischen und/oder keramischen Pulvers (12) auf dem ersten Plattformbereich (34) aufgebaut wird, wobei das Pulver (12) zumindest einen zweiten Werkstoff umfasst, welcher von dem ersten Werkstoff verschieden ist.

Ein weiterer Aspekt der Erfindung betrifft eine Schaufel (10), welche durch ein derartiges Verfahren erhältlich und/oder erhalten ist.

## Beschreibung

Die Erfindung betrifft ein Verfahren zum Herstellen einer Schaufel für eine Strömungsmaschine, insbesondere für ein Flugtriebwerk. Ein weiterer Aspekt der Erfindung betrifft eine derartige Schaufel welche durch ein entsprechendes Verfahren erhältlich und/oder erhalten ist.

Bei der Fertigung von Schaufeln für Strömungsmaschinen ist zur Gewährleistung einer hohen Ausfallsicherheit größte Sorgfalt geboten. Bei der Auslegung und Herstellung der Schaufeln liegt eine erhebliche Herausforderung darin, dass diese einerseits extremen mechanischen und thermischen Belastungen Stand halten sollen und andererseits ein möglichst hoher Wirkungsgrad beim Betrieb der Strömungsmaschine erreicht werden soll.

Aus der EP 1 878 522 A1 ist ein Verfahren zum Herstellen von Turbinenschaufeln durch ein Schichtauftragsverfahren bekannt. Die Turbinenschaufeln werden dabei mittels Elektronenstrahlsinterung aus einem metallischen Pulver gewonnen.

Die DE 10 2012 201 082 A1 zeigt ein Verfahren zum Herstellen geschmiedeter Bauteile aus einer TiAl-Legierung. Hierbei werden die Bauteile durch sogenanntes isothermes Schmieden geformt und nachfolgend einer Wärmebehandlung unterzogen. Des Weiteren ist die Verwendung einer TiAl-Legierung zum Herstellen von Komponenten einer Strömungsmaschine aus der EP 2 905 350 Albekannt.

Die Druckschrift DE 10 2006 049 219 A1 beschreibt ein Verfahren zur Reparatur von Hockdruckturbinen-Schaufeln. Dabei wird ein mit einer Beschädigung versehener Abschnitt einer Schaufel abgetrennt und ein Ersatzabschnitt für den abgetrennten Abschnitt mittels Laserstrahlgenerierens aus einem Pulverbett erzeugt.

Aufgabe der vorliegenden Erfindung ist es, ein Verfahren der eingangs genannten Art zu schaffen, welches eine flexible Werkstoffwahl beim Herstellen einer Schaufel und damit eine besonders auf die mechanischen und thermischen Belastungen der Schaufel abgestimmte Schaufelfertigung zulässt. Eine weitere Aufgabe der Erfindung ist es, eine Schaufel bereitzustellen bei welcher die Werkstoffe einzelner Komponenten der Schaufel besonders flexibel auswählbar sind.

Die Aufgaben werden erfindungsgemäß durch ein Verfahren mit den Merkmalen des Patentanspruchs 1 und eine Schaufel gemäß Patentanspruch 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen des jeweils anderen Erfindungsaspekts und umgekehrt anzusehen sind.

Ein erster Aspekt der Erfindung betrifft ein Verfahren zum Herstellen einer Schaufel für eine Strömungsmaschine, insbesondere für ein Flugtriebwerk, umfassend zumindest folgende Schritte:
- Herstellen eines Schaufelfußes mit einem ersten Plattformbereich aus einem ersten Werkstoff;
- Herstellen eines Schaufelblatts durch ein generatives Herstellverfahren, bei welchem das Schaufelblatt mit einem zweiten Plattformbereich in einem mit einem Unterdruck beaufschlagten Aufbaubereich durch schichtweises Verschmelzen und/oder Versintern eines metallischen und/oder keramischen Pulvers auf dem ersten Plattformbereich aufgebaut wird, wobei das Pulver zumindest einen zweiten Werkstoff umfasst, welcher von dem ersten Werkstoff verschieden ist.

Die beiden Plattformbereiche können zu einer Plattform und dabei der Schaufelfuß mit dem Schaufelblatt verbunden werden. Die Plattform kann dabei ein sogenanntes Innendeckband sein. Das Herstellen des Schaufelfußes kann beispielsweise durch Schmieden erfolgen und getrennt von dem Bereitstellen des Schaufelblatts durchgeführt werden. Bei dem ersten Werkstoff kann es sich beispielsweise um sogenanntes TNM-TiAl, welches auch als Titanaluminid (oder in Kurzform: γ-Titan) bezeichnet werden kann, handeln. Diese Werkstoffgruppe zeichnet sich durch eine besonders hohe Warmfestigkeit bei gleichzeitig geringer Dichte aus. Dementsprechend ist dieser Werkstoff besonders geeignet, um daraus Bauteile herzustellen, welche bei deren bestimmungsgemäßem Gebrauch hohen Temperaturen und großen Fliehkräften ausgesetzt sind. Das Pulver kann beispielsweise aus einem oder mehreren metallischen und zusätzlich oder alternativ aus einem oder mehreren keramischen Werkstoffen gebildet sein. Dabei ist auch eine Verwendung einer Mischung aus metallischen und keramischen Werkstoffen als das Pulver denkbar. Werden zwei oder mehr verschiedene Metalle verwendet, so kann aus dem Pulver eine sogenannte intermetallische Verbindung durch das Wärmezuführverfahren gebildet werden. Als der zweite Werkstoff, welcher Bestandteil des Pulvers sein kann, kann beispielweise ein hochlegierter TiAl-Werkstoff eingesetzt werden, welchem Legierungsbestandteile wie W, Mo, Nb oder Co zugesetzt sein können, um nur einige mögliche Legierungsbestandteile zu nennen. Durch die Verwendung des zweiten Werkstoffs ergibt sich eine besonders günstige und flexible Werkstoffwahl beim Herstellen der Schaufel wodurch eine auf die mechanischen und thermischen Belastungen der Schaufel abgestimmte Schaufelfertigung möglich ist. Durch das Beaufschlagen des Aufbaubereichs mit dem Unterdruck kann eine besonders effektive Verdichtung des Pulvers beim Aufbau des Schaufelblatts erfolgen und letzteres somit mit einem besonders geringen Porenanteil und entsprechend großer Stabilität hergestellt werden. Des Weiteren trägt ein geringer Luftanteil infolge der Erzeugung des Unterdrucks dazu bei, dass etwaige, unerwünschte Oxidationsprozesse des Pulvers bei dessen schichtweisem Verschmelzen und/oder Versintern durch das generative Herstellverfahren weniger stark ausgeprägt sind, als dies unter atmosphärischem Luftdruck und entsprechend größeren Luftanteilen im Pulver der Fall wäre. Bei dem generativen Herstellverfahren kann beispielsweise ein Elektronenstrahlschmelzen, welches auch als EBM-Verfahren (Electron Beam Melting) bezeichnet werden kann und zusätzlich oder alternativ ein selektives Laserschmelzen, welches auch als SLM-Verfahren (Selective Laser Melting) bezeichnet werden kann, eingesetzt werden. Hierbei kann das Schaufelblatt an dem mit dem Unterdruck beaufschlagten Aufbaubereich und auf dem Schaufelfuß in einem Pulver-Schichtbett-Verfahren aus dem Pulver aufgebaut werden.

In einer vorteilhaften Ausgestaltung der Erfindung wird als das generative Herstellverfahren ein Elektronenstrahlschmelzverfahren und/oder ein selektives Laserschmelzverfahren verwendet. Das Elektronenstrahlschmelzverfahren, auch unter dem Begriff "Electron Beam Melting" oder kurz "EBM" bekannt, sowie das selektive Laserschmelzverfahren, welches auch als "Selective Laser Melting" oder kurz "SLM" - bezeichnet werden kann, stellen generative Herstellverfahren dar, mittels welchen auch Bauteile mit komplexen Formen hergestellt werden können. Das EBM kann auch zusätzlich oder alternativ zu dem SLM eingesetzt werden

In einer vorteilhaften Ausgestaltung der Erfindung wird das Pulver vor dem Herstellen des Schaufelblatts durch das generative Herstellverfahren auf eine Erwärmungstemperatur erwärmt, welche kleiner ist, als eine Schmelztemperatur und/oder als eine Sintertemperatur des Pulvers. Bei dem generativen Herstellverfahren kann wie bereits erwähnt beispielsweise ein Elektronenstrahlschmelzen oder ein selektives Laserschmelzen des Pulvers erfolgen, um nur einige Beispiele zu nennen. Bei der Erwärmungstemperatur kann es bereits zu einem Ansintern zumindest einzelner Pulverkörner kommen. Durch das Erwärmen des Pulvers auf die Erwärmungstemperatur kann auch zwischen den Pulverkörnern eingeschlossene Luft aufgeheizt werden, was zur Folge hat, dass diese Luft eine im Vergleich zu kälterer Luft geringere Dichte sowie einen geringeren Sauerstoffanteil aufweist. Aufgrund des geringen Sauerstoffanteils können etwaige, unerwünschte Oxidationsprozesse beim generativen Herstellen des Schaufelblatts zumindest verringert werden. Das Erwärmen des Pulvers auf die Erwärmungstemperatur beschleunigt des Weiteren die Herstellung des Schaufelblatts aus dem Pulver, so dass lediglich ein Zuführen eines geringen Energiebetrags nötig ist, um das Pulver ausgehend von der Erwärmungstemperatur auf die Schmelztemperatur oder die Sintertemperatur aufzuheizen und das Schaufelblatt aus dem Pulver zu bilden.

In einer weiteren vorteilhaften Ausgestaltung der Erfindung wird ein Verbindungsbereich des Schaufelblatts, an welchem dieses mit dem Schaufelfuß verbunden wird, aus dem ersten Werkstoff und/oder aus dem zweiten Werkstoff hergestellt. Der Verbindungsbereich des Schaufelblatts kann bei dem generativen Herstellverfahren auf der Schaufelfußfläche durch Verbinden von einer oder mehrerer Pulverschichten gebildet und dabei unter Bildung eines Stoffschlusses mit dem Schaufelfuß verbunden werden. Bei der Herstellung des Schaufelblatts aus dem Pulver kann letzteres durch das generative Herstellverfahren schichtweise konsolidiert und zu dem Schaufelblatt verbunden werden. Der Verbindungsbereich des Schaufelblatts kann auch aus Ti-Al, beispielsweise aus TNM-TiAl, hergestellt werden, welches von dem zweiten Werkstoff verschieden ist. Prinzipiell ist eine Herstellung des Verbindungsbereichs aus dem ersten Werkstoff und zusätzlich oder alternativ aus dem zweiten Werkstoff denkbar, sofern dies im Rahmen der Anforderungen an die mechanische und/oder thermische Belastbarkeit zulässig ist.

In einer weiteren vorteilhaften Ausgestaltung der Erfindung wird eine Schaufelfußfläche des Schaufelfußes, an welcher dieser mit dem Schaufelblatt verbunden wird, vor dem Verbinden durch ein spanendes Verfahren und/oder durch ein Elektrolyseverfahren geglättet. Durch das dem Verbinden vorausgehende Glätten der Schaufelfußfläche kann eine besonders haltbare Verbindung zwischen dem Schaufelfuß und dem Schaufelblatt geschaffen werden.

In einer weiteren vorteilhaften Ausgestaltung der Erfindung werden der Schaufelfuß und das Schaufelblatt nach dem Verbinden einem gemeinsamen heiß-isostatischen Pressen unterzogen. Bei diesem heiß-isostatischen Pressen, welches auch als "HIP" abgekürzt werden kann, wird eine Mikrostruktur im beispielsweise aus TNM-TiAl hergestellten Schaufelfuß in eine sogenannte Tuplex-Mikrostruktur mit hohem globularem Gamma-Anteil umgewandelt, wodurch beispielsweise eine gute Zerspanbarkeit des Schaufelfußes erreicht werden kann.

In einer weiteren vorteilhaften Ausgestaltung der Erfindung wird das Schaufelblatt nach dessen Herstellung zum Einstellen einer Korngrößenverteilung einer lokalen Glüherwärmung unterzogen. Bei dieser Glüherwärmung kann eine an die Herstellung anschließende globale Ofenglühung der gesamten Schaufel oder alternativ dazu eine lokale, induktive Aufheizung des Schaufelblatts aus der hochlegierten TiAl-Legierung erfolgen. Diese Arten der Glühbehandlung werden in einem Temperaturbereich durchgeführt, in welchem eine homogene Korngrößenverteilung in der Schaufel erreicht werden kann, so dass eine optimale Kriechfestigkeit im Schaufelblatt und eine hohe Festigkeit im Schaufelfuß eingestellt werden können.

In einer weiteren vorteilhaften Ausgestaltung der Erfindung werden der Schaufelfuß und das Schaufelblatt nach dem Verbinden einem gemeinsamen Auslagerungsglühen unterzogen. Die gesamte Schaufel kann in einem geeigneten Temperaturbereich einem derartigen Auslagerungsglühen unterzogen werden, wobei es zur Bildung einer Ausscheidungshärtung im Schaufelblatt kommen kann. Durch das Auslagerungsglühen werden zwar Ausscheidungen im Schaufelblatt erzeugt, gleichzeitig werden jedoch die Eigenschaften in dem beispielsweise aus TNM-TiAl hergestellten Schaufelfuß durch das Auslagerungsglühen nicht negativ beeinflusst.

In einer weiteren vorteilhaften Ausgestaltung der Erfindung wird der Schaufelfuß hergestellt, indem ein Körper aus dem ersten Werkstoff bereitgestellt, geschmiedet, homogenisierungsgeglüht und anschließend zu dem Schaufelfuß geformt wird. Der Schaufelfuß kann beispielsweise aus dem besagten Körper, welcher beispielsweise als Platte aus TNM-TiAl ausgebildet ist, hergestellt sein. Diese Platte kann nach deren Schmieden und Homogenisierungsglühen beispielsweise in quaderförmige Halbzeuge für die Herstellung einer Mehrzahl von Schaufelfüßen zerteilt werden. Die Halbzeuge können dann zu den Schaufelfüßen geformt werden. Dies stellt ein besonders kostengünstiges Herstellverfahren dar, bei welchem mehrere Schaufelfüße aufwandsarm bereitgestellt werden können.

In einer weiteren vorteilhaften Ausgestaltung der Erfindung wird als der erste Werkstoff eine TiAl-Legierung, insbesondere eine TNM-TiAl-Legierung, bereitgestellt. Eine derartige TNM-Legierung, welche einer γ-TiAl-Legierung entsprechen kann, weist eine besonders hohe Warmfestigkeit bei gleichzeitig geringer Dichte auf. Somit ist TNM-TiAl besonders für den Einsatz in Flugtriebwerken, also beispielsweise als Werkstoff für den Schaufelfuß, geeignet.

In einer weiteren vorteilhaften Ausgestaltung der Erfindung wird als der zweite Werkstoff eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt. Durch diese Legierungsbestandteile kann eine besonders gezielte Einstellung von Bauteileigenschaften erreicht werden. Somit sind diese Legierungen besonders geeignet um die Bauteileigenschaften beispielsweise des Schaufelblatts einzustellen.

Ein zweiter Aspekt der Erfindung betrifft eine Schaufel für eine Strömungsmaschine, insbesondere für ein Flugtriebwerk, welche durch ein erfindungsgemäßes Verfahren erhältlich und/oder erhalten ist. Eine derartige Schaufel kann durch eine besonders flexible Auswahl an Werkstoffen bereitgestellt werden. Die Werkstoffe können dabei je nach Art der Belastung der Schaufel miteinander kombiniert werden. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

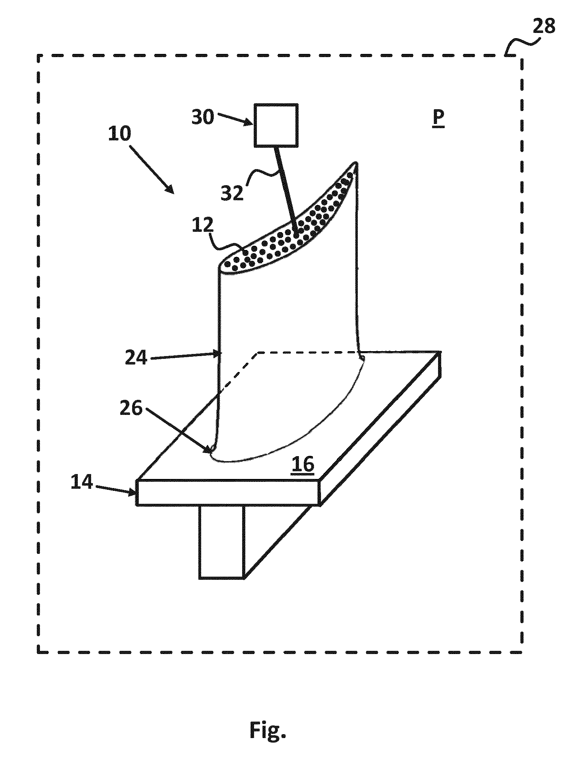

Weitere Merkmale der Erfindung ergeben sich aus den Ansprüchen, den Ausführungsbeispielen sowie anhand der Zeichnung. Die vorstehend in der Beschreibung genannten Merkmale und Merkmalskombinationen, sowie die nachfolgend in den Ausführungsbeispielen genannten und/oder alleine beschriebenen Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Dabei zeigt die einzige Figur eine schematische Perspektivansicht einer erfindungsgemäßen Schaufel für eine Strömungsmaschine.

Die Fig. zeigt eine Schaufel 10 für eine Strömungsmaschine für ein Flugtriebwerk. Die Schaufel 10 kann, wie im vorliegenden Ausführungsbeispiel, als Rotorschaufel für einen hier nicht weiter dargestellten Rotorgrundkörper ausgebildet sein. Die Schaufel 10 könnte jedoch alternativ dazu auch beispielsweise als Leitschaufel eines Leitrades ausgebildet sein.

Ein Schaufelfuß 14 der Schaufel 10 weist einen ersten Plattformbereich 34 auf und ist vorliegend aus einem, aus einer γ-TiAl-Legierung gebildeten ersten Werkstoff hergestellt, wobei die γ-TiAl-Legierung auch als TNM-TiAl bezeichnet werden kann. Der Schaufelfuß 14 ist dabei aus einem geschmiedeten, homogenisierungsgeglühten Körper aus dem ersten Werkstoff geformt.

Des Weiteren zeigt die Figur zumindest ausschnittweise das Herstellen eines Schaufelblatts 24 der Schaufel 10 durch ein generatives Herstellverfahren, bei welchem das Schaufelblatt 24 mit einem zweiten Plattformbereich 36 in einem mit einem Unterdruck p beaufschlagten Aufbaubereich 28 an dem Schaufelfuß 14 aufgebaut und mit diesem verbunden wird. Dadurch sind die beiden Plattformbereiche 34, 36 zu einer Plattform 38 und damit der Schaufelfuß 14 mit dem Schaufelblatt 24 verbunden. Die Plattform 38 kann dabei ein sogenanntes Innendeckband sein. Das Schaufelblatt 24 wird im vorliegenden Ausführungsbeispiel aus einem metallischen Pulver 12 in dem Aufbaubereich 28 aufgebaut, wobei das Pulver 12 zumindest einen zweiten Werkstoff umfasst, welcher von dem ersten Werkstoff verschieden ist. Der Aufbaubereich 28 kann beispielsweise von einer Unterdruckkammer begrenzt sein, in welcher der Unterdruck p einstellbar ist.

Der zweite Werkstoff ist als eine TiAl-Legierung welche neben Ti und Al als weiteren Legierungsbestandteil Wolfram umfasst, ausgebildet. Die TiAl-Legierung kann auch andere oder mehrere Elemente aus der Gruppe W, Mo, Nb, Co, Hf, Y, Zr, Er, Gd, Si und C umfassen, um die Werkstoffeigenschaften des Pulvers 12 und damit des daraus herzustellenden Schaufelblatts 24 möglichst exakt einzustellen.

Das Schaufelblatt 24 umfasst einen Verbindungsbereich 26, an welchem das Schaufelblatt 24 an einer Schaufelfußfläche 16 mit dem Schaufelfuß 14 verbunden ist. Der Verbindungsbereich 26 ist vorliegend aus einem Werkstoffpulver des ersten Werkstoffs durch das generative Herstellverfahren hergestellt. Die Schaufelfußfläche 16 wurde vor dem Verbinden des Schaufelblatts 24 mit dem Schaufelfuß 14 durch ein Elektrolyseverfahren geglättet.

Bei dem vorliegenden generativen Herstellverfahren handelt es sich um ein sogenanntes SLM-Verfahren, wobei durch einen Laser 30 ein Laserstrahl 32 emittiert wird, um damit das Schaufelblatt 24 auf einer Schaufelfußfläche 16 des Schaufelfußes 14 durch schichtweises Aufschmelzen des Pulvers 12 herzustellen.

Um einen schnelleren Aufbau des Schaufelblatts 24 auf dem Schaufelfuß 14 zu ermöglichen, wurde das Pulver 12 beim Herstellen, und beispielsweise bereits vor dem Herstellen des Schaufelblatts 24 auf eine Erwärmungstemperatur erwärmt, welche kleiner ist, als eine Schmelztemperatur des Pulvers 12. Dadurch kann ein schnelleres Konsolidieren des Pulvers 12 bei dem generativen Herstellverfahren erreicht werden. Des Weiteren kann auch der Schaufelfuß 14 vor dem Herstellen des Schaufelblatts 24 auf die Erwärmungstemperatur erwärmt werden. Durch das Erwärmen sowohl des Pulvers 12, als auch des Schaufelfußes 14 vor dem Herstellen des Schaufelblatts 24, kann ein schnelleres Verschmelzen und/oder Versintern des Pulvers 12 und damit ein schnelleres Verbinden des Schaufelfußes 14 mit dem Schaufelblatt 24 erfolgen. Der Schaufelfuß 14 kann dabei zusammen mit dem Pulver 12 in dem mit dem Unterdruck p beaufschlagten Aufbaubereich 28 und vor dem Herstellen des Schaufelblatts 24 auf die Erwärmungstemperatur erwärmt werden. Der Schaufelfuß 14 und das Schaufelblatt 24 werden nach dem Verbinden einem gemeinsamen heiß-isostatischen Pressen unterzogen. Dadurch kann eine Mikrostruktur im Schaufelfuß 14 in eine Triplex-Mikrostruktur mit hohem globularem Gamma-Anteil umgewandelt werden, wodurch beispielsweise eine gute Zerspanbarkeit des Schaufelfußes erreicht werden kann.

Nach der Herstellung des Schaufelblatts 24 wird dieses zum Einstellen einer Korngrößenverteilung einer lokalen Glüherwärmung unterzogen. Des Weiteren werden der Schaufelfuß 14 und das Schaufelblatt 24 nach dem Verbinden einem gemeinsamen Auslagerungsglühen unterzogen um eine gezielte Ausscheidungshärtung herbeizuführen.

Die Schaufel 10 kann nun durch Fügen des Schaufelfußes 14, beispielsweise durch eine Steckverbindung, an dem hier nicht gezeigten Rotorgrundkörper festgelegt werden.

Zusammenfassend beschreibt das vorliegende Verfahren die Herstellung der Schaufel 10, wobei das Schaufelblatt 24 durch das beispielsweise einem EBM-Verfahren und/oder SLM-Verfahren entsprechende generative Herstellverfahren unter dem Unterdruck p direkt auf dem Schaufelfuß 24 aufgebaut werden kann. Das Schaufelblatt 24 kann mittels des EBM-/ SLM-Verfahrens auf den Schaufelfuß 24 als Bulk aufgebaut werden, wodurch beispielsweise gegenüber einem isotropen, pulvermetallurgischen Aufbau unter Verwendung von Kapseln andere und zumindest teilweise günstigere Bedingungen bezüglich Textur, mechanischer Eigenschaften, Gefügehomogenität und Mikrostruktur in dem Schaufelblatt 24 erreicht werden.

Bei dem vorgestellten Verfahren ist die Verwendung von mehreren Werkstoffen und damit von unterschiedlichen TiAl-Legierungen zur Herstellung der Schaufel 10 ermöglicht. Damit können auch die unterschiedlichen Werkstoffeigenschaften der jeweiligen Werkstoffe in der Schaufel 10 gezielt genutzt werden. So ist eine flexible Werkstoffwahl bei der Herstellung des Schaufelfußes 14 und des Schaufelblatts 24 möglich und dadurch die gesamte Schaufel 10 besonders exakt hinsichtlich zu erwartender Belastungen auslegbar und herstellbar. Das Schaufelblatt 24 kann durch dessen Herstellung aus dem Pulver 12 mit besonders guten Kriecheigenschaften versehen werden. Dies wäre aufgrund von Anforderungen an eine Mindestduktilität der Schaufel 10 nicht möglich, wenn diese - in aus dem Stand der Technik bekannter Weise - lediglich aus einem Werkstoff gebildet wäre.

Neuartige, hochtemperaturbeständige und hochlegierte TiAl-Legierungen gelten als besonders spröde. Dadurch ist die Auslegung einer Anbindung des Schaufelfußes 14 an den Rotorgrundkörper, welcher auch als Scheibe bezeichnet werden kann, sehr schwierig in Bezug auf etwaige Belastungen und ertragbare plastische Verformungen in einem Kontaktbereich zwischen dem Schaufelfuß 14 und der Scheibe sowie im Schaufelfuß 14 selbst. Da der Schaufelfuß 14 geringeren Temperaturbelastungen aber höheren Spannungen als das Schaufelblatt 24 ausgesetzt ist, das Schaufelblatt 24 aber höchsten Kriechbelastungen standhalten soll, führt dies zu mechanischen Problemen bei der Auslegung und Herstellung. Dies ist damit zu begründen, dass die Kriechbeständigkeit nur zu Lasten der Duktilität erhöht werden kann.

Durch eine Verwendung unterschiedlicher Materialien für den Schaufelfuß 14 und das Schaufelblatt 24 können diese Probleme zumindest vermindert werden. Die Verwendung von unterschiedlichen TiAl-Werkstoffen, deren mechanische Eigenschaften optimal auf die lokalen Anforderungen abgestimmt sind, ermöglicht unter Beibehaltung des Gewichtsvorteils von TiAl die konstruktive Umsetzung mechanisch trennbarer Schaufel-Scheibe-Verbindungen. Der Schaufelfuß 14 und das Schaufelblatt 24, welche jeweils aus unterschiedlichen TiAl-Werkstoffen hergestellt sind, werden im dicksten Querschnitt an der Schaufelfußfläche 16 des Schaufelfußes 14 und an dem Verbindungsbereich 26 durch das generative Herstellverfahren bei dem Unterdruck p miteinander verbunden. Durch eine entsprechende Wärmebehandlung (Glüherwärmung, Auslagerungsglühen) der damit geschaffenen Schaufel 10 werden in beiden Teilen, also im Schaufelfuß 14 und im Schaufelblatt 24, voneinander verschiedene Mikrostrukturen eingestellt, welche zum Einhalten von Anforderungen an die Belastbarkeit der Schaufel 10 beitragen. Der Schaufelfuß 14 weist dann eine besonders hohe Duktilität und Festigkeit und dafür eine geringe Kriechbeständigkeit auf. Hingegen weist das Schaufelblatt 24 eine besonders hohe Kriechbeständigkeit und eine konstante Festigkeit bis zu einer Temperatur von bis zu 900°C auf Kosten der Festigkeit bei niedriger Temperatur und geringer Duktilität auf. Als zweiter Werkstoff können TiAl-Legierungen mit hohen W, Mo, Nb, Co, Hf, Y, Zr, Er, Gd, Si, C Anteilen zur Herstellung des Schaufelblatts 24 verwendet werden, ohne dass etwaige Duktilitätsforderungen für den Schaufelfuß 14 unterschritten werden.

### Bezugszeichenliste

- 10: Schaufel
- 12: Pulver
- 14: Schaufelfuß
- 16: Schaufelfußfläche
- 24: Schaufelblatt
- 26: Verbindungsbereich
- 28: Aufbaubereich
- 30: Laser
- 32: Laserstrahl
- 34: erster Plattformbereich
- 36: zweiter Plattformbereich
- 38: Plattform
- p: Unterdruck

## Patentansprüche

1. Verfahren zum Herstellen einer Schaufel (10) für eine Strömungsmaschine, insbesondere für ein Flugtriebwerk, umfassend zumindest folgende Schritte:
- Herstellen eines Schaufelfußes (14) mit einem ersten Plattformbereich (34) aus einem ersten Werkstoff;
- Herstellen eines Schaufelblatts (24) durch ein generatives Herstellverfahren, bei welchem das Schaufelblatt (24) mit einem zweiten Plattformbereich (36) in einem mit einem Unterdruck (p) beaufschlagten Aufbaubereich (28) durch schichtweises Verschmelzen und/oder Versintern eines metallischen und/oder keramischen Pulvers (12) auf dem ersten Plattformbereich (34) aufgebaut wird, wobei das Pulver (12) zumindest einen zweiten Werkstoff umfasst, welcher von dem ersten Werkstoff verschieden ist.

2. Verfahren nach Anspruch 1,
**dadurch gekennzeichnet, dass**
als das generative Herstellverfahren ein Elektronenstrahlschmelzverfahren und/oder ein selektives Laserschmelzverfahren verwendet wird.

3. Verfahren nach Anspruch 1 oder 2,
**dadurch gekennzeichnet, dass**
das Pulver (12) vor dem Herstellen des Schaufelblatts (24) durch das generative Herstellverfahren auf eine Erwärmungstemperatur erwärmt wird, welche kleiner ist, als eine Schmelztemperatur und/oder als eine Sintertemperatur des Pulvers (12).

4. Verfahren nach einem der vorhergehenden Ansprüche,
**dadurch gekennzeichnet, dass**
ein Verbindungsbereich (26) des Schaufelblatts (24), an welchem dieses mit dem Schaufelfuß (14) verbunden wird, aus dem ersten Werkstoff und/oder aus dem zweiten Werkstoff hergestellt wird.

5. Verfahren nach einem der vorhergehenden Ansprüche,
**dadurch gekennzeichnet, dass**
eine Schaufelfußfläche (16) des Schaufelfußes (14), an welcher dieser mit dem Schaufelblatt (24) verbunden wird, vor dem Verbinden durch ein spanendes Verfahren und/oder durch ein Elektrolyseverfahren geglättet wird.

6. Verfahren nach einem der vorhergehenden Ansprüche,
**dadurch gekennzeichnet, dass**
der Schaufelfuß (14) und das Schaufelblatt (24) nach dem Verbinden einem gemeinsamen heiß-isostatischen Pressen unterzogen werden.

7. Verfahren nach einem der vorhergehenden Ansprüche,
**dadurch gekennzeichnet, dass**
das Schaufelblatt (24) nach dessen Herstellung zum Einstellen einer Korngrößenverteilung einer lokalen Glüherwärmung unterzogen wird.

8. Verfahren nach einem der vorhergehenden Ansprüche,
**dadurch gekennzeichnet, dass**
der Schaufelfuß (14) und das Schaufelblatt (24) nach dem Verbinden einem gemeinsamen Auslagerungsglühen unterzogen werden.

9. Verfahren nach einem der vorhergehenden Ansprüche,
**dadurch gekennzeichnet, dass**
der Schaufelfuß (14) hergestellt wird, indem ein Körper aus dem ersten Werkstoff bereitgestellt, geschmiedet, homogenisierungsgeglüht und anschließend zu dem Schaufelfuß (14) geformt wird.

10. Verfahren nach einem der vorhergehenden Ansprüche,
**dadurch gekennzeichnet, dass**
als der erste Werkstoff eine TiAl-Legierung, insbesondere eine TNM-TiAl - Legierung, bereitgestellt wird.

11. Verfahren nach einem der vorhergehenden Ansprüche,
**dadurch gekennzeichnet, dass**
als der zweite Werkstoff eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt wird.

12. Schaufel (10) für eine Strömungsmaschine, insbesondere für ein Flugtriebwerk, welche durch ein Verfahren nach einem der Ansprüche 1 bis 11 erhältlich und/oder erhalten ist.
